# EUROPEAN PATENT APPLICATION

(11) **EP 4 141 838 A1**
(43) Date of publication of application: **01.03.2023**
(21) Application number: 21192593.8
(22) Date of filing: 23.08.2021
(51) Int. Cl.: G08G 1/16, G06V 20/56, G06V 20/58

(54) **VALIDATION OF SURROUNDING OBJECTS PERCEIVED BY AN ADS-EQUIPPED VEHICLE**

(71) Applicant: Zenseact AB, 417 56 Göteborg (SE)
(72) Inventor: BACKHOUSE, Andrew, 417 68 Göteborg (SE); SVENSSON, Daniel, 414 59 Göteborg (SE); RAHMATHULLAH, Abu Sajana, 433 64 Sävedalen (SE); SZYMONIK, Jacek, 426 71 Västra Frölunda (SE); LUNDGREN, Malin, 413 26 Göteborg (SE)
(74) Representative: Valea AB

(57) **Abstract**

The present disclosure relates to a method performed by an object validation system (1) for validating perceived surrounding objects to support safety-critical threat assessment governing emergency maneuvering of an ADS (21) on-board a vehicle (2). The object validation system stores (1001) in respective sensor/modality-specific data buffers, respective sensor/modality-specific sensor data (3) obtained at least during a predeterminable time interval continuously and/or intermittently from one or more vehicle-mounted surrounding detecting sensors (23). The object validation system further determines (1002) with support from a perception module (22) configured to generate perception data (220) based on sensor data from one or more vehicle-mounted surrounding detecting sensors, object data (40) of a perceived object (4) valid for said time interval. Moreover, the object validation system evaluates (1003) one or more of the respective sensor/modality-specific data buffers, separately, in view of the object data. Furthermore, the object validation system determines (1004) that the perceived object is a validated object when the object data matches sensed objects in the one or more respective sensor/modality-specific data buffers according to predeterminable matching criteria, and otherwise is an unvalidated object.

The disclosure also relates to an object validation system in accordance with the foregoing, a vehicle comprising such an object validation system, and a respective corresponding computer program product and non-volatile computer readable storage medium.

## Description

### TECHNICAL FIELD

The present disclosure relates to validating perceived surrounding objects to support safety-critical threat assessment governing emergency maneuvering of an ADS on-board a vehicle.

### BACKGROUND

Within the automotive field, there has for quite some years been activity in development of autonomous vehicles. An increasing number of modern vehicles have advanced driver-assistance systems, ADAS, to increase vehicle safety and more generally road safety. ADAS - which for instance may be represented by collision avoidance system, forward collision warning, etc. - are electronic systems that may aid a vehicle driver while driving. Moreover, in a not-too-distant future, Autonomous Driving, AD, will to greater extent find its way into modern vehicles. AD along with ADAS will herein be referred to under the common term Automated Driving System, ADS, corresponding to all different levels of automation, for instance as defined by the SAE J3016 levels (0 - 5) of driving automation. An ADS may be construed as a complex combination of various components that can be defined as systems where perception, decision making, and operation of the vehicle - at least in part - are performed by electronics and machinery instead of a human driver. This may include handling of the vehicle, destination, as well as awareness of surroundings. While the automated system has control over the vehicle, it allows the human operator to leave all or at least some responsibilities to the system. To perceive its surroundings, an ADS commonly combines a variety of sensors, such as e.g. radar, LIDAR, sonar, camera, navigation and/or positioning system e.g. GNSS such as GPS, odometer and/or inertial measurement units, upon which advanced control systems may interpret sensory information to identify appropriate navigation paths, as well as obstacles and/or relevant signage.

Vehicles equipped with ADSs, must possess the ability to perform an emergency evasive maneuver operation for an object or obstacle within the planned direction of driving. The performance of such an operation is safety-critical, and emergency evasive maneuver logic that decides if an emergency stop or emergency steering should be initiated therefore requires input that is safety classified. Additionally, this input is preferably such that it does not lead to unnecessary braking, which potentially can lead to collision, e.g., by the ego-vehicle being rear-ended. The input in question consists of objects or obstacles that have been detected and temporally tracked using one or several sensor systems. A perception module then processes the input sensor data to produce an environmental description of the surrounding environment with respect to said objects and obstacles. Inherently, the solution to obtain objects of high accuracy and trustworthiness is both computationally, algorithmically, and programmatically complex, and in addition thereto, perception algorithms may be both probabilistic and recursive, which makes safety classification of such a module an intricate task.

Furthermore, for any perception module - and/or sensor fusion or target/object tracking module associated therewith - there is always a trade-off between false negatives and false positives, and this trade-off is feature-dependent. For emergency braking, false positives are safety critical since they may lead to rear-ending collisions. However, for other features, the opposite may be true. For instance, a feature that autonomously drives the vehicle must not run into objects, which puts strict requirements on false negatives. A false positive, on the other hand, might not be as problematic since the autonomous function will drive with caution. The effect of a false positive may then be slow movement of the ego-vehicle, which is not problematic from a safety perspective, albeit from a comfort perspective. Accordingly, providing a perception module that both detects a large proportion of the objects, while still ensuring no false braking, is thus challenging.

Evasive maneuvers are typically the response to an unexpected occurrence, such as a pedestrian running out into the road, or a lead vehicle braking abruptly. Therefore, there is a desire to respond quickly to the situation. However, evasive actions should preferably not be performed unless they are absolutely necessary, as such actions may cause risk to other road users. There are therefore conflicting requirements; an evasive action is preferably triggered rapidly, as soon as a dangerous situation occurs, while being very sure that unmotivated evasive actions are not triggered. Fortunately, very short evasive actions are typically not dangerous, and it is therefore considered safe if unmotivated evasive actions can be aborted early. A primary cause of a false intervention may be incorrect data from the perception module, and although they may be acceptable if infrequent, these short interventions are preferably avoided as they may be uncomfortable to vehicle occupants, such as the driver. There is accordingly a need for an approach where an evasive action may be triggered based on tracks/objects with sufficiently high quality to limit the number of unpleasant short interventions, but where evasive maneuvers may be aborted if the reported objects do not reach said higher quality, to thereby avoid potentially dangerous unmotivated evasive maneuvers.

### SUMMARY OF THE INVENTION

It is therefore an object of embodiments herein to provide an approach for in an improved and/or alternative manner validate perceived surrounding objects to support safety-critical threat assessment governing emergency maneuvering of an ADS-equipped vehicle.

The disclosed subject-matter relates to a method performed by an object validation system for validating perceived surrounding objects to support safety-critical threat assessment governing emergency maneuvering of an ADS on-board a vehicle. The object validation system stores in respective sensor/modality-specific data buffers, respective sensor/modality-specific sensor data obtained at least during a predeterminable time interval continuously and/or intermittently from one or more vehicle-mounted surrounding detecting sensors. The object validation system further determines with support from a perception module configured to generate perception data based on sensor data from one or more vehicle-mounted surrounding detecting sensors, object data of a perceived object valid for said time interval. Moreover, the object validation system evaluates one or more of the respective sensor/modality-specific data buffers, separately, in view of the object data. Furthermore, the object validation system determines that the perceived object is a validated object when the object data matches sensed objects in the one or more respective sensor/modality-specific data buffers according to predeterminable matching criteria, and otherwise is an unvalidated object.

The disclosed subject-matter further relates to an object validation system for validating perceived surrounding objects to support safety-critical threat assessment governing emergency maneuvering of an ADS on-board a vehicle. The object validation system comprises a sensor data storing unit for storing in respective sensor/modality-specific data buffers, respective sensor/modality-specific sensor data obtained at least during a predeterminable time interval continuously and/or intermittently from one or more vehicle-mounted surrounding detecting sensors. The object validation system further comprises an object data determining unit for determining with support from a perception module configured to generate perception data based on sensor data from one or more vehicle-mounted surrounding detecting sensors, object data of a perceived object valid for said time interval. Moreover, the object validation system comprises an evaluating unit for evaluating one or more of the respective sensor/modality-specific data buffers, separately, in view of the object data. Furthermore, the object validation system comprises a validation determining unit for determining that the perceived object is a validated object when the object data matches sensed objects in the one or more respective sensor/modality-specific data buffers according to predeterminable matching criteria, and otherwise is an unvalidated object.

Furthermore, the disclosed subject-matter relates to a vehicle comprising an object validation system as described herein.

Moreover, the disclosed subject-matter relates to a computer program product comprising a computer program containing computer program code means arranged to cause a computer or a processor to execute the steps of the object validation system described herein, stored on a computer-readable medium or a carrier wave.

The disclosed subject-matter further relates to a non-volatile computer readable storage medium having stored thereon said computer program product.

Thereby, there is introduced an approach according to which safety-critical threat assessment is supported in an improved and/or alternative manner, by enabling provision of validated - such as safety-classified - object information from a perception module, for instance to a threat assessment module and/or a collision avoidance system. That is, since there is stored in respective sensor/modality-specific data buffers, respective sensor/modality-specific sensor data obtained at least during a predeterminable time interval continuously and/or intermittently from one or more vehicle-mounted surrounding detecting sensors, there is - as the vehicle is travelling - obtained and subsequently stored in separate data buffers, for separate surrounding detecting sensors or separate sensor modalities, respective sensor data of the surroundings of the vehicle gathered at least during a specific period of time. Accordingly, for instance for a first surrounding detecting sensor - or for a first type or modality of surrounding-detecting sensors such as e.g. camera - sensor data of said first surrounding detecting sensor(s) collected at least during said period of time is stored in a first sensor/modality-specific data buffer, whereas for an n^{th} surrounding detecting sensor - or for an n^{th} type or modality of surrounding-detecting sensors such as e.g. radar - sensor data of said n^{th} surrounding detecting sensor(s) collected at least during said period of time is stored in an n^{th} sensor/modality-specific data buffer. The sensor/modality-specific sensor data in respective separate sensor/modality-specific buffers may thus differ from one sensor/modality-specific data buffer to another, and may further reveal differences and/or slight variations, at least to some extent, in terms of sensed objects and/or detections thereof in the vehicle surroundings during said time period. Furthermore, that is, since there - with support from a perception module configured to generate perception data based on sensor data from one or more vehicle-mounted surrounding detecting sensors - is determined object data of a perceived object valid for said time interval, there is estimated and/or calculated properties, attributes, features and/or information of - and/or associated with - an object perceived by the perception module, applying to and/or pertinent the predeterminable time interval. Thus, for the same or essentially the same time period for which respective sensor/modality-specific sensor data at least is obtained and subsequently stored in separate data buffers for separate surrounding detecting sensors or sensor modalities, there is determined object data - such as e.g. object track and/or trajectory e.g. comprising object class, object kinematic states and/or object uncertainty regions; object motion model; sensor(s) associations and/or sensor data associations etc. - of an object perceived in the vehicle surroundings, applicable for said time period. Moreover, that is, since one or more of the respective sensor/modality-specific data buffers are evaluated, separately, in view of the object data, the sensor/modality-specific data buffers may one by one be matched with, and/or assessed in consideration of, the perceived object's object data. Accordingly, sensor/modality-specific sensor data such as detections of an object and/or objects in the vehicle surroundings obtained during the predeterminable time interval, may for respective surrounding detecting sensor or sensor modality be evaluated - separately - in view of properties, attributes, features and/or information of- and/or associated with - the perceived object, such as e.g. object track., estimated for the corresponding time interval. Thus, since in respective separate sensor/modality-specific buffers the sensor/modality-specific sensor data - and subsequently potential detections of an object and/or objects in the vehicle surroundings - may differ from one sensor/modality-specific buffer to another, so may respective evaluation in view of the object data. Furthermore, that is, since there is determined that the perceived object is a validated object when the object data matches sensed objects in the one or more respective sensor/modality-specific data buffers according to predeterminable matching criteria, and otherwise is an unvalidated object; as a result of the evaluation process, should the perceived object - or rather its object data such as its track - to a predeterminable extent comply with - e.g. overlap - a sensed object and/or objects comprised in a predeterminable number of - and/or predeterminable constellation of - the evaluated sensor/modality-specific data buffers, then said perceived object is determined validated hence deemed not a false positive, whereas if the opposite is true then said perceived object is determined unvalidated hence deemed a false positive. In other words, the feasibility of an output from a perception module - here represented by the perceived object - may be evaluated by comparing the perceived object, or rather its object data, with evidence and/or observations of the object from one or more surrounding detecting sensors in recent time, here represented by said object being comprised in one or more sensor/modality-specific data buffers. For objects or obstacles where there is sufficient agreement, validation is possible, which implies that those objects or obstacles may be used in safety critical threat assessment - such as by a safety-critical threat assessment module - and be the source of emergency maneuvering such as emergency braking and/or steering operations. Subsequently, safety requirements - for instance stipulated by the ISO 26262 standard - may then be fulfilled. That is, given object data such as a track of a perceived object from - and/or with support from - the perception module, and given sensor/modality-specific sensor data from each surrounding detecting sensor and/or sensor modality, or a subset thereof, infer whether the sensor/modality-specific sensor data gives sufficient support for the existence of an object. If that is the case, that object is marked as validated, which means that it may be used for safety-critical threat assessment, such as included in a safety-critical part of a threat assessment module of the ADS.

For that reason, an approach is provided for in an improved and/or alternative manner validate perceived surrounding objects to support safety-critical threat assessment governing emergency maneuvering of an ADS-equipped vehicle.

### BRIEF DESCRIPTION OF THE DRAWINGS

The various aspects of the non-limiting embodiments, including particular features and advantages, will be readily understood from the following detailed description and the accompanying drawings, in which:
Fig. 1 illustrates a schematic view of an exemplifying scenario involving an exemplifying object validation system according to embodiments of the disclosure;
Fig. 2 is a schematic block diagram illustrating an exemplifying object validation system according to embodiments of the disclosure;
Fig. 3 is a flowchart depicting an exemplifying method performed by an object validation system according to embodiments of the disclosure,
Fig. 4 is a schematic block diagram illustrating an exemplifying validation process of an object validation system according to embodiments of the disclosure; and
Fig. 5 is a schematic block diagram illustrating another exemplifying validation process of an object validation system according to embodiments of the disclosure.

### DETAILED DESCRIPTION

Non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to validating perceived surrounding objects to support safety-critical threat assessment governing emergency maneuvering of an ADS on-board a vehicle, there will be disclosed an approach according to which safety-critical threat assessment is supported in an improved and/or alternative manner, by enabling provision of validated - such as safety-classified - object information from a perception module, for instance to a threat assessment module and/or a collision avoidance system.

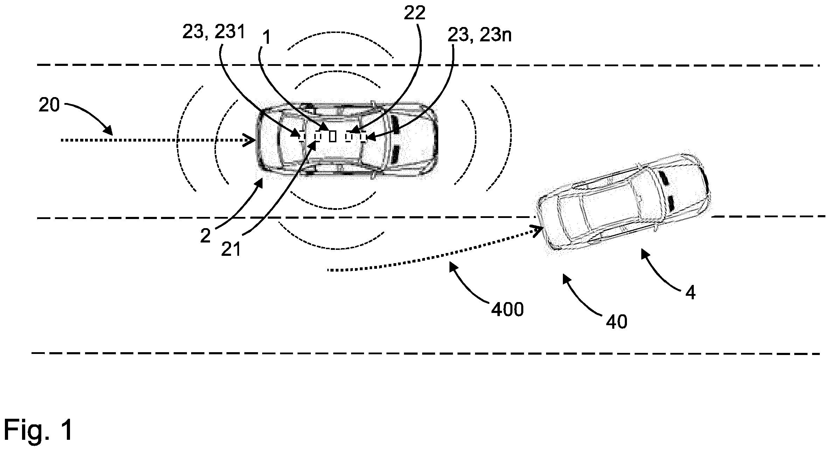

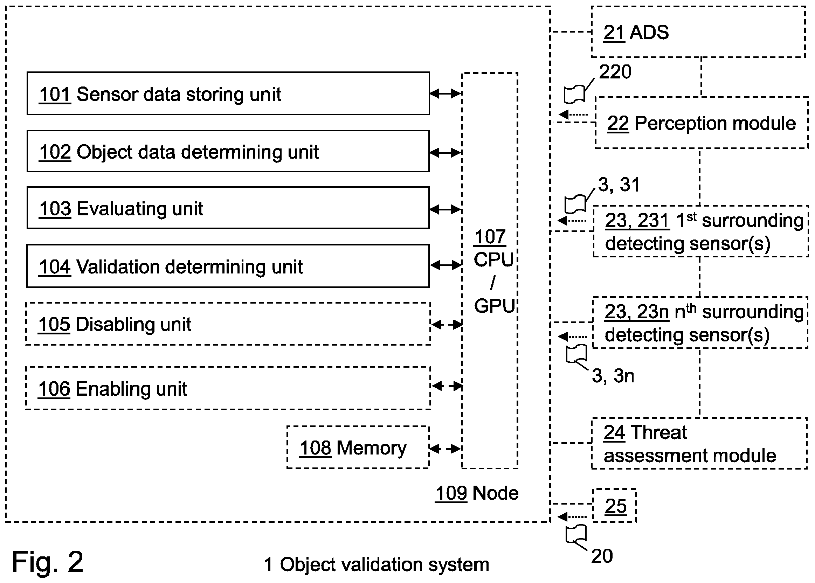

Referring now to the figures, there is depicted in Fig. 1 a schematic view of an exemplifying scenario involving an exemplifying object validation system 1 according to embodiments of the disclosure, and in Fig. 2 depicted a schematic block diagram of an exemplifying object validation system 1 according to embodiments of the disclosure. The object validation system 1 is adapted for validating perceived surrounding objects to support safety-critical threat assessment governing emergency maneuvering of an ADS 21 on-board a vehicle 2.

The vehicle 2 - which may be referred to as ego-vehicle or host vehicle - may be represented by any arbitrary - e.g. known - manned or unmanned vehicle, for instance an engine-propelled or electrically-powered vehicle such as a car, truck, lorry, van, bus and/or tractor. Moreover, the term "vehicle" may refer to "autonomous and/or at least partly autonomous vehicle", "driverless and/or at least partly driverless vehicle", and/or "self-driving and/or at least partly self-driving vehicle". Moreover, the ADS 21 on-board the vehicle 2 may be represented by any arbitrary ADAS or AD system e.g. known in the art and/or yet to be developed. Moreover, as depicted in an exemplifying manner in Figs. 1-2, the vehicle 2 and/or ADS 21 comprises, is provided with and/or has onboard a perception module 22 - which may also be referred to as environmental perception module, sensor fusion module and/or perception system - adapted to estimate surroundings of the vehicle 2, and subsequently adapted to estimate perception data 220 - which may also be referred to as world view data - of the surroundings e.g. with support from a - e.g. commonly known - digital map such as a high definition, HD, map, and/or an equivalent and/or successor thereof. The perception module 22 may refer to any commonly known system and/or functionality, e.g. comprised in one or more electronic control modules, ECUs, and/or nodes of the vehicle 2 and/or the ADS 21, adapted and/or configured to interpret sensory information - relevant for driving of the vehicle 2 - to identify e.g. objects, obstacles, vehicle lanes, relevant signage, appropriate navigation paths etc. The perception module 22 -which may be adapted to support e.g. sensor fusion, tracking, localization etc. - may thus be adapted to rely on sensory information. Such exemplifying sensory information may for instance be derived from one or more - e.g. commonly known - sensors comprised in and/or provided onboard the vehicle 2 - herein also referred to as vehicle-mounted sensors - adapted to sense and/or perceive the vehicle's 2 whereabouts and/or surroundings, for instance represented by one or a combination of one or more of **surrounding detecting sensors 23,** such as image capturing devices e.g. cameras, LIDARs, RADARs, ultrasonic sensors etc., and/or a positioning system, odometer, inertial measurement units etc. In other words, a perception module 22 is in the present context thus to be understood as a module and/or system responsible for acquiring raw sensor data from on-board sensors and converting this raw data into scene understanding. Safety-critical threat assessment governing emergency maneuvering of the ADS-equipped vehicle 2 may then, as depicted in an exemplifying manner in Fig. 2, for instance be performed by an optional **threat assessment module 24,** threat assessor and/or collision avoidance system. The phrase "object validation system" may refer to "object assessment system", "object comparing system" and/or "perceived track assessment system", whereas "a method performed by an object validation system" may refer to "an at least partly computer-implemented method performed by an object validation system". Moreover, "for validating perceived surrounding objects" may refer to "for validating the existence of perceived surrounding objects" and/or "for validating perceived external objects". The phrase "for validating perceived surrounding objects to support safety-critical threat assessment governing emergency maneuvering of an ADS on-board a vehicle", on the other hand, may refer to "for validating perceived surrounding objects to support safety-critical threat assessment governing emergency braking and/or steering operations of an ADS on-board a vehicle", "for validating perceived surrounding objects to support safety-critical threat assessment of a threat assessment module, threat assessor and/or collision avoidance system governing emergency maneuvering of an ADS on-board a vehicle" and/or merely "for validating perceived surrounding objects to support safety-critical threat assessment in an ADS on-board a vehicle", and according to an example further to "for providing safety-classified object information to a threat assessment module, threat assessor and/or collision avoidance system governing emergency maneuvering of an ADS on-board a vehicle", "for supporting safety-critical threat assessment in an ADS on-board a vehicle" and/or "for supporting autonomous emergency maneuvering of an ADS on-board a vehicle".

As illustrated in an exemplifying manner in exemplifying Fig. 2, the object validation system 1 is - e.g. by means of a **sensor data storing unit 101** - adapted and/or configured for storing in respective **sensor/modality-specific data buffers,** respective **sensor/modality-specific sensor data 3** obtained at least during a predeterminable time interval continuously and/or intermittently from one or more vehicle-mounted surrounding detecting sensors 23. Thereby, as the vehicle 2 is travelling, there is obtained and subsequently stored in separate data buffers, for separate surrounding detecting sensors 23 or separate sensor modalities, respective sensor data 3 of the surroundings of the vehicle 2 gathered at least during a specific period of time. Accordingly, as depicted in an exemplifying manner in Figs. 1-2, for a **first surrounding detecting sensor 231** - or for a first type or modality of surrounding-detecting sensors 231 such as e.g. camera - **sensor data 31** of said first surrounding detecting sensor(s) 231 collected at least during said period of time is stored in a first sensor/modality-specific data buffer, whereas for an **n^{th} surrounding detecting sensor 23n** - or for an n^{th} type or modality of surrounding-detecting sensors 23n such as e.g. radar - **sensor data 3n** of said n^{th} surrounding detecting sensor(s) 23n collected at least during said period of time is stored in an n^{th} sensor/modality-specific data buffer. The sensor/modality-specific sensor data 3, 31, 3n in respective separate sensor/modality-specific buffers may thus differ from one sensor/modality-specific buffer to another, and may further reveal differences and/or slight variations, at least to some extent, in terms of sensed objects and/or detections thereof in the vehicle surroundings during said time interval.

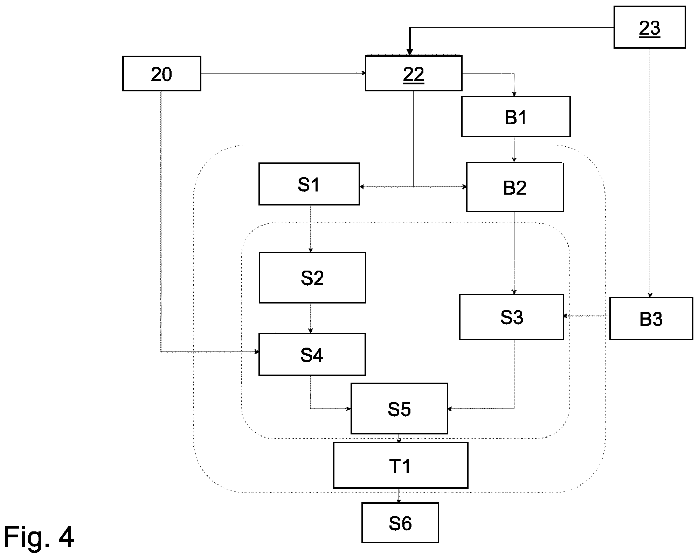

Respective sensor/modality-specific data 3 may be gathered from any feasible number of vehicle-mounted surrounding detecting sensors 23, and correspondingly, the predeterminable time interval and subsequently sizes of respective sensor/modality-specific data buffers may be of any feasible dimensions, such as the time interval for instance ranging from a few milliseconds up to several seconds or even minutes and/or the number of separate sensor/modality-specific data buffers ranging for instance from a single data buffer up to several or even tens of data buffers. Moreover, a time duration during which respective sensor/modality-specific data 3 is gathered may differ from one sensor 23 and/or modality to another. According to an example, which will be described in greater detail in conjunction with Figs. 4-5 further on, there may further be stored and/or be determined - and/or respective sensor/modality-specific data buffers may comprise - respective error regions and/or uncertainties deduced from potential sensor measurement errors of the corresponding sensor(s) 231, 23n. The phrase "storing in respective sensor/modality-specific data buffers" may refer to "storing, as said vehicle is moving and/or travelling, in respective sensor/modality-specific data buffers", "storing separately", "storing in respective separate sensor/modality-specific data buffers", "storing digitally and/or electronically in respective sensor/modality-specific data buffers" and/or "saving in respective sensor/modality-specific data buffers", and according to an example further to "storing in respective sensor/modality-specific data buffers of said object validation system and/or said ADS" and/or "storing in respective sensor/modality-specific data buffers where two or more of said sensor/modality-specific buffers are contained on separate CPUs". For the latter, there is thus a reduced risk of common faults related to hardware. Moreover, "respective sensor/modality-specific sensor data" may refer to "respective separate sensor/modality-specific sensor data", "respective sensor/modality-specific sensor data of vehicle surroundings" and/or "respective sensor-specific and/or modality-specific sensor data".

As illustrated in an exemplifying manner in exemplifying Figs. 1-2, the object validation system 1 is further - e.g. by means of an **object data determining unit 102** - adapted and/or configured for, with support from a perception module 22 configured to generate perception data 220 based on sensor data from one or more vehicle-mounted surrounding detecting sensors 23, determining **object data 40** of a **perceived object 4** valid for said time interval. Thereby, there is estimated and/or calculated properties, attributes, features and/or information 40 of - and/or associated with - an object 4 perceived by the perception module 22, applying to and/or pertinent the predeterminable time interval. Thus, as depicted in an exemplifying manner in Fig. 1 where the perceived object 4 is represented by another vehicle about to cross the ego-vehicle's 2 intended and/or assumed path; for the same or essentially the same time period for which - as discussed above - respective sensor/modality-specific sensor data 3 at least is obtained and subsequently stored in separate data buffers for separate surrounding detecting sensors 23 or separate sensor modalities, there is determined object data 40 - such as e.g. object track and/or trajectory e.g. comprising object class, object kinematic states and/or object uncertainty regions; object motion model; sensor(s) associations and/or sensor data associations etc. - of an object 4 perceived in the vehicle surroundings, applicable for said time period.

The perception data 220 may be based on sensor data from any feasible number on on-board surrounding detecting sensors 23, for instance ranging from a single sensor 23 up to several or even tens of sensors 23, and may - or may not - equate to the previously discussed sensors 23 for which sensor-modality specific data buffers are stored. The perception module 22, on the other hand, may be represented by the previously discussed perception module 22, and act accordingly. Moreover, the perceived object 4 in surroundings of the vehicle 2 may be represented by any feasible at least first object and or obstacle perceived in the vehicle surroundings by the perception module 22, and for instance be represented by a dynamic or static object such as e.g. another vehicle, a vulnerable road user, barriers etc. The object data 40 of the perceived object 4 valid for the predeterminable time interval, on the other hand, may be determined for instance based on and/or extracted from - such as being a subset of - perception data 220 generated continuously and/or intermittently at least during said time interval. Additionally or alternatively, the object data 40 valid for the predeterminable time interval may be determined for instance based on retrodiction, such as using current states estimates of the perceived object 4 to calculate the object track and/or trajectory 400 applicable for said time interval. The object data 40 may be represented by any feasible properties, attributes, features and/or information 40 of, and/or associated with, the - by the perception module 22 perceived - object 4, and for instance comprise and/or be represented by one or more of said object's 4 trajectory and/or track e.g. comprising class and/or states, motion model, etc. Accordingly, the perceived object 4 may, due to that the vehicle 2 - and potentially also the perceived object 4 - may be moving during the predeterminable time interval, equate to and/or be represented by an **object track and/or trajectory 400** characterized by the perceived object's 4 physical extent e.g. perceived class and/or history of perceived kinematic state(s) - and potentially further history of uncertainties - during said time interval. According to an example - which will be described in greater detail in conjunction with Figs. 4-5 further on - the object data 40 may comprise error regions and/or uncertainties deduced from safety requirements associated with the perceived object's 4 states. Furthermore, according to an example - which will be described in greater detail in conjunction with Fig. 4 further on - the object data 40 may comprise sensor(s) associations and/or sensor data associations, meaning that there may be determined, stored and/or buffered - e.g. in a data buffer such as a perceived object data buffer - continuously and/or intermittently at least during the predeterminable time interval, connections between respective surrounding detecting sensor(s)' 23, 231, 23n sensor data 3, 31, 3n and the object track 400, indicating which of respective surrounding detecting sensor(s)' 23, 231, 23n sensor data 3, 31, 3n - which may also be referred to as detections - contributed to updating states of the object track 400 during the time interval. In addition to determining object data 40 of the perceived object 4 applicable for the time interval, the vehicle's 2 own **motion(s) and/or state(s) 20** e.g. speed, acceleration, yaw rate etc. during sad time interval - for instance determined by exemplifying one or more **ego-vehicle sensors** and/or an **ego-vehicle state estimation module 25** - may additionally be determined and/or be stored, for instance in association with the object data 40 or separately. The phrase "determining [...] object data of a perceived object valid for said time interval" may refer to "estimating, deriving and/or storing, e.g. in a perceived object data buffer for instance of said object validation system and/or said ADS, [...] object data of a perceived object valid for said time interval", "determining [...] object information of a perceived object valid for said time interval", "determining [...] object data of at least a first perceived object valid for said time interval", "determining [...] object data of - and/or associated with - a perceived object valid for said time interval", "determining [...] object data of a perceived object comprised in said perception data valid for said time interval" and/or "determining [...] object data of a perceived object reflecting, applicable for, estimated for and/or pertinent said time interval". Moreover, "valid for said time interval" may refer to "valid for essentially said time interval" and/or "valid for at least a portion and/or a specific portion of said time interval". The phrase "perception module configured to generate perception data", on the other hand, may refer to "perception module adapted to generate and/or provide perception data", whereas "based on sensor data" may refer to "using as input sensor data".

As illustrated in an exemplifying manner in exemplifying Fig. 2, the object validation system 1 is further - e.g. by means of an **evaluating unit 103 -** adapted and/or configured for evaluating one or more of the respective sensor/modality-specific data buffers, separately, in view of the object data 40. Thereby, the sensor/modality-specific data buffers - respectively devoted to differing surrounding detecting sensors 23, 231, 23n and/or differing sensor modalities such as the first sensor/modality-specific data buffer being devoted to the at least first surrounding detecting sensor 231 e.g. represented by camera(s) and the n^{th} sensor/modality-specific data buffer being devoted to the at least n^{th} surrounding detecting sensor e.g. represented by radar(s) - may one by one be matched with, and/or assessed in consideration of, the perceived object's 4 object data 40. Accordingly, sensor/modality-specific sensor data 3 such as detections of an object and/or objects in the vehicle surroundings obtained during the predeterminable time interval, may for respective surrounding detecting sensor or sensor modality 31, 3n be evaluated - separately - in view of properties, attributes, features and/or information 40 of - and/or associated with - the perceived object 4, such as e.g. object track 400 e.g. comprising object class, object kinematic states and/or object uncertainty regions; object motion model; sensor(s) associations and/or sensor data associations etc., estimated for the corresponding time interval. Thus, since in respective separate sensor/modality-specific buffers the sensor/modality-specific sensor data 31, 3n - and subsequently potential detections of an object and/or objects in the vehicle surroundings - may differ from one sensor/modality-specific buffer to another, so may respective evaluation in view of the object data 40.

Respective sensor/modality-specific data buffer may be separately evaluated in view of the object data 40 for the entire predeterminable time interval or at least a portion - or a respective portion - of said time interval. Furthermore, the evaluation process may involve any feasible number of timestamps along the time interval such as for instance timestamps related to state updates of the perceived object 4 and/or of the perceived object's 4 track 400. Moreover, since a perception module 22 may be statistical in nature, and further, since sensor information may include statistical noise, uncertainties both in sensor/modality-specific sensor data 3 and in a sensor fusion output - such as a perceived object 4 - may be taken into consideration. Thus, optionally, and as will be explained in greater detail in conjunction with Figs. 4-5 further on, the evaluating of one or more of the respective sensor/modality-specific data buffers, separately, in view of the object data 40, may comprise comparison of error regions - which may be referred to as uncertainties - deduced from potential sensor measurement errors, and error regions - which similarly may be referred to as uncertainties - deduced from safety requirements associated with the perceived object's 4 states. The phrase "evaluating one or more of said respective sensor/modality-specific data buffers, separately" may refer to "assessing, matching, validating and/or comparing one or more of said respective sensor/modality-specific data buffers, separately" and/or "evaluating one or more of said respective sensor/modality-specific data buffers one by one", and according to an example further to "evaluating one or more of said respective sensor/modality-specific data buffers, separately, on separate CPUs for at least two of said sensor/modality-specific data buffers". For the latter, there is thus a reduced risk of common faults related to hardware. Moreover, "in view of said object data" may refer to "with reference to said object data".

As illustrated in an exemplifying manner in exemplifying Figs.1- 2, the object validation system 1 is further - e.g. by means of a **validation determining unit 104** - adapted and/or configured for determining that the perceived object 4 is a validated object when the object data 40 matches sensed objects in the one or more respective sensor/modality-specific data buffers according to predeterminable matching criteria, and otherwise is an unvalidated object Thereby, as a result of the evaluation process described above, should the perceived object 4 - or rather its object data 40 such as its track 400 - to a predeterminable extent comply with - e.g. overlap - a sensed object and/or objects comprised in a predeterminable number of - and/or predeterminable constellation of - the evaluated sensor/modality-specific data buffers, then said perceived object 4 is determined validated hence deemed not a false positive, whereas if the opposite is true then said perceived object 4 is determined unvalidated hence deemed a false positive. In other words, the feasibility of an output from a perception module 22 - here represented by the perceived object 4 - may be evaluated by comparing the perceived object 4, or rather its object data 40, with evidence and/or observations of the object from one or more surrounding detecting sensors 23 in recent time, here represented by said object being comprised in one or more sensor/modality-specific data buffers. For objects or obstacles where there is sufficient agreement, validation is possible, which implies that those objects or obstacles may be used in safety critical threat assessment - such as by a safety-critical threat assessment module 24 - and be the source of emergency maneuvering such as emergency braking and/or steering operations, which is relevant in exemplifying Fig. 1 where the perceived object 4 is represented by another vehicle about to cross the ego-vehicle's 2 intended and/or assumed path thus implicating a safety-critical situation. Subsequently, safety requirements - for instance stipulated by the ISO 26262 standard - may then be fulfilled. That is, given object data 40 such as a track 400 of a perceived object 4 from - and/or with support from - the perception module 22, and given sensor/modality-specific sensor data 3 from each surrounding detecting sensor 23 and/or sensor modality, or a subset thereof, infer whether the sensor/modality-specific sensor data 3 gives sufficient support for the existence of an object. If that is the case, that object is marked as validated, which means that it may be used in safety-critical threat assessment, such as included in a safety-critical part of a threat assessment module and/or system 24 of the ADS 21. Thus, the object validation system 1 may further - e.g. by means of an **enabling unit 106** - be adapted and/or configured for enabling the perceived object 4 to be considered in safety-critical threat assessment when said perceived object 4 is determined a validated object. Additionally or alternatively, the object validation system 1 may further - e.g. by means of a **disabling unit 105** - be adapted and/or configured for disabling the perceived object 4 from being considered in safety-critical threat assessment when said perceived object 4 is determined an unvalidated object. Thereby, the object validation system 1 may instruct a potential threat assessment module 24 and/or collision avoidance system to admit, include and/or allow the perceived object 4 in safety-critical assessment - and/or to admit and/or allow emergency maneuvers to be activated based on the perceived object 4 - when said perceived object 4 is determined a validated object, subsequently not a false positive, and/or to discard, block, prevent and/or ignore the perceived object 4 - and/or exclude the perceived object 4 from safety-critical assessment and/or not to activate emergency maneuvers based on the perceived object 4 - when said perceived object 4 is determined an unvalidated object, subsequently a false positive.

The predeterminable matching criteria may be represented by any feasible one or more criteria and/or thresholds stipulating conditions and/or limits for when there is considered to be compliance such as overlap between the perceived object 4 - or rather its object data 40 such as its track 400 - and a sensed object in an evaluated sensor/modality-specific data buffer, and further for what number of - and/or for what constellation of - evaluated sensor/modality-specific data buffers such compliance and/or overlap should be fulfilled in order for the perceived object 4 to be considered a validated object. Such compliance and/or overlap conditions and/or limits may be set as deemed relevant for instance taking into consideration safety requirements, and correspondingly, such number of and/or constellation of evaluated sensor/modality-specific data buffers may similarly be set as deemed relevant for instance taking into consideration safety requirements, e.g. range from a single, to several ,to all evaluated sensor-modality-specific data buffers. Thus, optionally, the matching criteria may comprise fulfilling predeterminable overlap criteria, for instance stipulating conditions for object class overlap such as relating to type and/or physical extent, object region overlap and/or object state overlap such as relating to position, velocity, acceleration, yaw rate etc. Moreover, optionally, the matching criteria may thus comprise finding a match for a predeterminable number of and/or for a predeterminable combination of the one or more respective sensor/modality-specific data buffers. A reason for potentially not using all surrounding detecting sensors 23 - subsequently all sensor/modality-specific buffers - in the evaluation process which may also be referred to as the validation process, may be for keeping complexity of said evaluation process at a low level, and/or for not all surrounding detecting sensors 23 being expected to be sufficiently trustworthy to use in an object existence validation scheme. The phrase "determining [...] when the object data matches" may refer to "determining [...] should and/or if the object data matches" and/or "determining [...] when the object data agrees, overlaps and/or complies", whereas "a validated object" may refer to "not a false positive". Correspondingly, "an unvalidated object" may refer to "a false positive". The phrase "matches sensed objects in said one or more respective sensor/modality specific data buffers", on the other hand, may refer to "matches an object or objects comprised in said one or more respective sensor/modality specific data buffers", whereas "according to predeterminable matching criteria" may refer to "according to predeterminable object validation criteria". Furthermore, according to an example, the phrase "determining that said perceived object is a validated object when the object data matches sensed objects in said one or more respective sensor/modality-specific data buffers according to predeterminable matching criteria" may refer to "determining that said perceived object is a validated object when said object data (40) to a predeterminable extent complies with, agrees with and/or overlaps a respective sensed object in said one or more respective sensor/modality-specific data buffers, for a predeterminable number of and/or for a predeterminable constellation of the sensor/modality-specific data buffers ".

In the following, there is described an exemplifying validation process of an object validation system 1 according to embodiments of the disclosure. The validation of a tracked object may first be done per surrounding detecting sensor 23 and/or per modality thereof, such as the first surrounding detecting sensor(s) 231 e.g. represented by camera(s) and the n^{th} surrounding detecting sensor(s) 23n e.g. represented by radar(s) being validate separately, to thereby have a less complex solution, as a way of introducing redundancy, and/or to limit dependency between surrounding detecting sensors 23. In safety terms, an ASIL decomposition may hence be performed in accordance with part 9 of the ISO 26262 standard. The output of each sensor-specific and/or modality specific validation, may be a list of tracks 400, where the ones being validated by the particular sensor 231, 23n may be selected and/or marked or attributed in an appropriate manner. Thereafter, the respective sensor-specific and/or modality specific validation outputs may be combined to form a fused validation output. Such a validation fusion can range from simple counting, or logical AND and logical OR operations, to using soft information about the existence of the object from respective sensor-specific and/or modality specific validation, which can be combined to produce one validation signal for the object. This provides the possibility of having a trade-off between availability, in the sense of a high frequency of validated tracks, and false positives. In the example of logical gates, the most conservative setup would be to have a logical AND gate, which requires that respective surrounding detecting sensor or sensor modality 231, 23n - subsequently respective sensor/modality specific data buffer - each validates the track, while the least conservative setup would be a logical OR gate. In between these, all possible combinations are possible.

As further shown in Fig. 2, the object validation system 1 comprises a sensor data storing unit 101, an object data determining unit 102, an evaluating unit 103, a validation determining unit 104, an optional disabling unit 105, and an optional enabling unit 106, all of which already have been described in greater detail above. Furthermore, the embodiments herein for validating perceived surrounding objects to support safety-critical threat assessment governing emergency maneuvering of an ADS 21 on-board a vehicle 2, may be implemented through one or more processors, such as a **processor 107,** for instance represented by at least a first Central Processing Unit, CPU, and/or at least a first Graphics Processing Unit, GPU, together with computer program code for performing the functions and actions of the embodiments herein. Said program code may also be provided as a computer program product, for instance in the form of a data carrier carrying computer program code for performing the embodiments herein when being loaded into the object validation system 1. One such carrier may be in the form of a CD/DVD ROM disc and/or a hard drive, it is however feasible with other data carriers. The computer program code may furthermore be provided as pure program code on a server and downloaded to the object validation system 1. The object validation system 1 may further comprise a **memory 108** comprising one or more memory units. The memory 108 optionally includes high-speed random access memory, such as DRAM, SRAM, DDR RAM, or other random access solid-state memory devices, and further optionally includes non-volatile memory, such as one or more magnetic disk storage devices, optical disk storage devices, flash memory devices, or other non-volatile solid-state storage devices. Moreover, the memory 108 may be arranged to be used to store e.g. information, and further to store data, configurations, scheduling, and applications, to perform the methods herein when being executed in the object validation system 1. For instance, the computer program code may be implemented in the firmware, stored in FLASH memory 108, of an embedded processor 107, and/or downloaded wirelessly e.g. from an off-board server. Furthermore, units 101-106, the optional processor 107 and/or the optional memory 108, may at least partly be comprised in one or more **nodes 109** e.g. ECUs of the vehicle 2, e.g. in and/or in association with the ADS 21. Those skilled in the art will also appreciate that said units 101-106 described above as well as any other unit, interface, system, controller, module, device, element, feature, or the like described herein may refer to, comprise, include, and/or be implemented in or by a combination of analog and digital circuits, and/or one or more processors configured with software and/or firmware, e.g. stored in a memory such as the memory 108, that when executed by the one or more processors such as the processor 107 perform as described herein. One or more of these processors, as well as the other digital hardware, may be included in a single Application-Specific Integrated Circuitry, ASIC, or several processors and various digital hardware may be distributed among several separate components, whether individually packaged or assembled into a System-on-a-Chip, SoC.

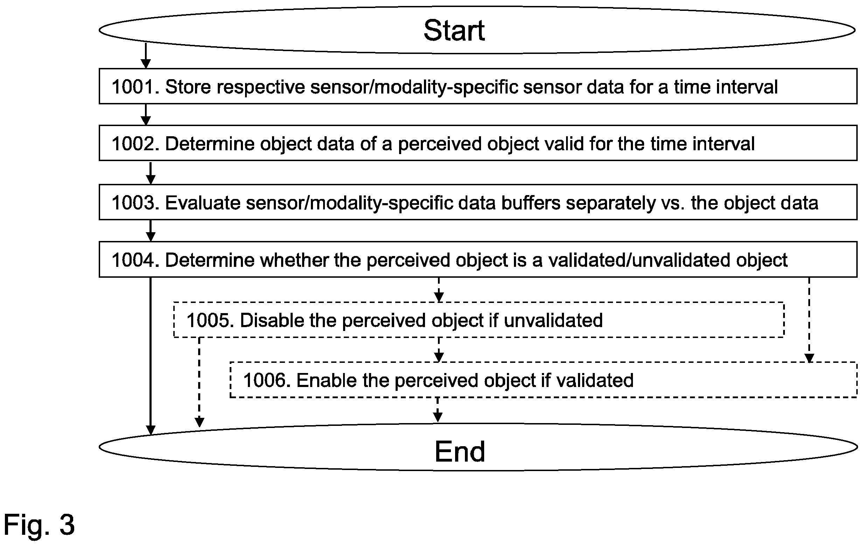

**Fig. 3** is a flowchart depicting an exemplifying method performed by an object validation system 1 according to embodiments of the disclosure. Said method is for validating perceived surrounding objects to support safety-critical threat assessment governing emergency maneuvering of an ADS 21 on-board a vehicle 2. The exemplifying method, which may be continuously repeated, comprises one or more of the following actions discussed with support from Figs. 1-2. Moreover, the actions may be taken in any suitable order and/or one or more actions may be performed simultaneously and/or in alternate order where applicable. For instance, optional Actions 1005 and 1006 may be performed in alternate order and/or simultaneously.

### Action 1001

In Action 1001, the object validation system 1 stores - e.g. with support from the sensor data storing unit 101 - in respective sensor/modality-specific data buffers, respective sensor/modality-specific sensor data 3 obtained at least during a predeterminable time interval continuously and/or intermittently from one or more vehicle-mounted surrounding detecting sensors 23.

### Action 1002

In Action 1002, the object validation system 1 determines - e.g. with support from the object data determining unit 102 -.with support from a perception module 22 configured to generate perception data 220 based on sensor data from one or more vehicle-mounted surrounding detecting sensors 23, object data 40 of a perceived object 4 valid for said time interval;

### Action 1003

In Action 1003, the object validation system 1 evaluates - e.g. with support from the evaluating unit 103 -.one or more of the respective sensor/modality-specific data buffers, separately, in view of the object data 40.

Optionally, step 1003 of evaluating may comprise - and/or the evaluating unit 103 may be adapted and/or configured for - comparison of error regions deduced from potential sensor measurement errors and error regions deduced from safety requirements associated with the perceived object's 4 states.

### Action 1004

In Action 1004, the object validation system 1 determines - e.g. with support from the validation determining unit 104 -. that the perceived object 4 is a validated object when the object data 40 matches sensed objects in the one or more respective sensor/modality-specific data buffers according to predeterminable matching criteria, and otherwise is an unvalidated object.

Optionally, the matching criteria may comprise finding a match for a predeterminable number of and/or combination of the one or more respective sensor/modality-specific data buffers.

Further optionally, the matching criteria may comprise fulfilling predeterminable overlap criteria, for instance stipulating conditions for object class overlap, object region overlap and/or object state overlap.

### Action 1005

In optional Action 1005, the object validation system 1 may - e.g. with support from the optional disabling unit 105 - disable the perceived object 4 from being considered in safety-critical threat assessment when the perceived object 4 is determined an unvalidated object.

### Action 1006

In optional Action 1006, the object validation system 1 may - e.g. with support from the optional enabling unit 106 - enable the perceived object 4 to be considered in safety-critical threat assessment when the perceived object 4 is determined a validated object.

As discussed above, uncertainties in the surrounding detecting sensors 23 and perception module 22 may be taken into consideration in the evaluation process, as will be exemplified below with support from Figs. 4-5. Thus, in the following, there is in conjunction with **Fig. 4** described an exemplifying validation process of an object validation system 1 according to embodiments of the disclosure, in which there is introduced backwards cross-checking using target tracking association information. Here, different kinds of information being output from the perception module 22 is used, such as states and class of the perceived object's 4 track, motion model associated with a particular track, and information about associations between sensor data - which may be referred to as detections - and corresponding tracks. Each of the track's states has certain predefined maximum error values that come from safety requirements of the feature. Given maximum errors for the estimated position of the track allow to **compute S1** an initial error region for the track being output from the perception module 22. The initial error region will be propagated to certain timestamps from the past - which may be referred to as retrodiction - with the use of the motion model corresponding to the track. Each vertex of the error region is **retrodicted S2** taking into account the uncertainties for the track's states used in the motion model. There is a **buffer B1** which stores the information about the sensor data associated with the track - in other words the association information determines which detections from the surrounding detecting sensor 23 were used to update states of the track being output from the perception module 22. For each track, the history is taken from **buffer B2.** Each detection from the history contains the timestamp of the track's states updates with a particular detection and a unique id of the detection. The history of detections from the surrounding detecting sensor 23 are stored in the separate **sensor data buffer B3,** which may be represented by the previously discussed sensor/modality-specific data buffer(s). Then using information about the detection's id at the particular timestamp for the track being considered (in B2), the respective sensor detection information is retrieved from the sensor data buffer B3. Sensor data - such as position - may also contain uncertainties which are deduced based on the performance of the sensor 23, namely sensor measurement error. The error region for each detection retrieved from the sensor data buffer B3 is created S3 in an analogical manner as in the case of track's initial error region (S1). The track's initial error region is then retrodicted to the consecutive timestamps used in S3 to retrieve detections from the buffer. In addition to retrodiction, **compensation S4** for ego-vehicle motion 20 is required - the position of output track is given in the moving ego vehicle-bound reference frame. In order to **confirm S5** the existence of the track, M out of N retrodicted track's error regions should overlap with the sensor detection error region. The overlap ratio of two error regions should be higher than some predefined **threshold T1.** The track is deemed **validated S6** only if the track existence confirmation counter exceeded the predefined threshold T1.

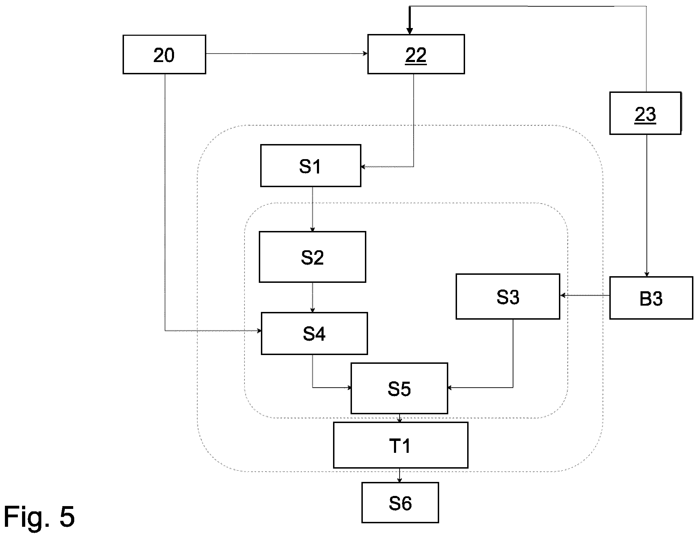

A further example of when uncertainties in the surrounding detecting sensors 23 and perception module 22 are taken into consideration in the evaluation process, is demonstrated in **Fig. 5** depicting an exemplifying validation process of an object validation system 1 according to embodiments of the disclosure, in which there is introduced backwards cross-checking **without** using target tracking association information. The blocks illustrated in Fig. 5 correspond to those of Fig. 4. Here, however - contrary to the example described in conjunction with Fig. 4 - the output tracks from the perception module 22 are validated using only sensor data stored in the sensor data buffer B3. The overlap ratio is calculated between the retrodicted track error region, compensated for ego-vehicle motion, and all possible candidate error regions calculated for sensor data from a particular timestamp.

The person skilled in the art realizes that the present disclosure by no means is limited to the preferred embodiments described above. On the contrary, many modifications and variations are possible within the scope of the appended claims. It should furthermore be noted that the drawings not necessarily are to scale and the dimensions of certain features may have been exaggerated for the sake of clarity. Emphasis is instead placed upon illustrating the principle of the embodiments herein. Additionally, in the claims, the word "comprising" does not exclude other elements or steps, and the indefinite article "a" or "an" does not exclude a plurality.

## Claims

1. A method performed by an object validation system (1) for validating perceived surrounding objects to support safety-critical threat assessment governing emergency maneuvering of an Automated Driving System, ADS (21), on-board a vehicle (2), said method comprising:
***storing*** (1001) in respective sensor/modality-specific data buffers, respective sensor/modality-specific sensor data (3) obtained at least during a predeterminable time interval continuously and/or intermittently from one or more vehicle-mounted surrounding detecting sensors (23);
***determining*** (1002) with support from a perception module (22) configured to generate perception data (220) based on sensor data from one or more vehicle-mounted surrounding detecting sensors (23), object data (40) of a perceived object (4) valid for said time interval;
***evaluating*** (1003) one or more of said respective sensor/modality-specific data buffers, separately, in view of said object data (40); and
***determining*** (1004) that said perceived object (4) is a validated object when the object data (40) matches sensed objects in said one or more respective sensor/modality-specific data buffers according to predeterminable matching criteria, and otherwise is an unvalidated object.

2. The method according to claim 1, further comprising:
***disabling*** (1005) said perceived object (4) from being considered in safety-critical threat assessment when said perceived object (4) is determined an unvalidated object.

3. The method according to claim 1 or 2, further comprising:
***enabling*** (1006) said perceived object (4) to be considered in safety-critical threat assessment when said perceived object is determined a validated object.

4. The method according to any one of claims 1-3, wherein said matching criteria comprises finding a match for a predeterminable number of and/or combination of said one or more respective sensor/modality-specific data buffers.

5. The method according to any one of claims 1-4, wherein said matching criteria comprises fulfilling predeterminable overlap criteria, for instance stipulating conditions for object class overlap, object region overlap and/or object state overlap.

6. The method according to any one of claims 1-5, wherein said ***evaluating*** (1003) comprises comparison of error regions deduced from potential sensor measurement errors and error regions deduced from safety requirements associated with the perceived object's (4) states.

7. An **object validation system** (1) for validating perceived surrounding objects to support safety-critical threat assessment governing emergency maneuvering of an Automated Driving System, ADS (21), on-board a vehicle (2), said object validation system (1) comprising:
a **sensor data storing unit** (101) for ***storing*** (1001) in respective sensor/modality-specific data buffers, respective sensor/modality-specific sensor data (3) obtained at least during a predeterminable time interval continuously and/or intermittently from one or more vehicle-mounted surrounding detecting sensors (23);
an **object data determining unit** (102) for ***determining*** (1002) with support from a perception module (22) configured to generate perception data (220) based on sensor data from one or more vehicle-mounted surrounding detecting sensors (23), object data (40) of a perceived object (4) valid for said time interval;
an **evaluating unit** (103) for ***evaluating*** (1003) one or more of said respective sensor/modality-specific data buffers, separately, in view of said object data (40); and
a **validation determining unit** (104) for ***determining*** (1004) that said perceived object (4) is a validated object when the object data (40) matches sensed objects in said one or more respective sensor/modality-specific data buffers according to predeterminable matching criteria, and otherwise is an unvalidated object.

8. The object validation system (1) according to claim 7, further comprising:
a **disabling unit** (105) for ***disabling*** (1005) said perceived object (4) from being considered in safety-critical threat assessment when said perceived object (4) is determined an unvalidated object.

9. The object validation system (1) according to claim 7 or 8, further comprising:
an **enabling unit** (106) for ***enabling*** (1006) said perceived object (4) to be considered in safety-critical threat assessment when said perceived object is determined a validated object.

10. The object validation system (1) according to any one of claims 7-9, wherein said matching criteria comprises finding a match for a predeterminable number of and/or combination of said one or more respective sensor/modality-specific data buffers.

11. The object validation system (1) according to any one of claims 7-10, wherein said matching criteria comprises fulfilling predeterminable overlap criteria, for instance stipulating conditions for object class overlap, object region overlap and/or object state overlap.

12. The object validation system (1) according to any one of claims 7-11, wherein said evaluating unit (103) is adapted for comparison of error regions deduced from potential sensor measurement errors and error regions deduced from safety requirements associated with the perceived object's (4) states.

13. A **vehicle** (2) comprising an object validation system (1) according to any one of claims 7-12.

14. A computer program product comprising a computer program containing computer program code means arranged to cause a computer or a processor to execute the steps of a method according to any of claims 1-6, stored on a computer-readable medium or a carrier wave.

15. A non-volatile computer readable storage medium having stored thereon the computer program product of claim 14.
